# EUROPÄISCHE PATENTSCHRIFT

(11) **EP 0 311 883 B1**
(45) Veröffentlichungstag und Bekanntmachung des Hinweises auf die Patenterteilung: **21.09.1994**
(21) Anmeldenummer: 88116490.9
(22) Anmeldetag: 05.10.1988
(51) Int. Cl.: G06F 12/02

(54) **Speicheranordnung**
Memory system
Système de mémoire

(30) Priorität: 13.10.1987 DE 3734639
(43) Veröffentlichungstag der Anmeldung: 19.04.1989
(73) Patentinhaber: SIEMENS AKTIENGESELLSCHAFT, 80333 München (DE)
(72) Erfinder: Schmolka, Christoph, Dipl.Inform., D-7523 Graben-Neudorf 1 (DE)

(56) Entgegenhaltungen:
- US-A- 4 428 045
- COMPUTER, Band 20, Nr. 1, Januar 1987, Seiten 67-74, IEEE, New York, US; D.UNGAR et al.: "What price smalltalk ?"
- NACHRICHTENTECHNISCHE ZEITSCHRIFT N.T.Z., Band 35, Nr. 11, November 1982,Seiten 702-705, Berlin, DE; H. HACKSTEIN: "Adressgenerierung beim iAPX 432"

## Beschreibung

Die Erfindung betrifft eine Speicheranordnung gemäß dem Oberbegriff des Anspruchs 1.

In der ersten Betriebsart, in der die Daten des Datenspeichers erzeugt, geändert oder gelöscht werden, werden diese unter Aufruf von Objektnamen (Name einer Variablen, Name eines Datenfeldes) angesprochen. Den Anwendern steht somit ein Hilfsmittel zur Verfügung, auf Daten eines Datenspeichers ohne Kenntnis der physikalischen Adresse der entsprechenden Datenspeicherzellen zuzugreifen.

In der zweiten Betriebsart, in der diese Daten gelesen und interpretiert werden, ist es insbesondere in der Prozeßdatenverarbeitung aus zeitkritischen Gründen unzweckmäßig, unter Aufruf von Objektnamen die Datenspeicherzellen zu adressieren. Ein schneller Zugriff auf die im Datenspeicher gespeicherten Daten erfolgt in dieser Betriebsart durch physikalische Adressierung der Datenspeicherzellen.

Für die genannten Betriebsarten ist eine Speicheranordnung mit einem Objektspeicher bekannt, der in der ersten Betriebsart die Objektnamen zum Adressieren der Speicherzellen eines oder mehreren Verweisspeichern enthält, in denen die physikalischen Adressen zur Adressierung der Datenspeicherzellen abgespeichert sind, und der in der zweiten Betriebsart anstatt der Objektnamen die physikalischen Adressen zur Adressierung der Datenspeicherzellen enthält.

Der Nachteil dieser Speicheranordnung besteht darin, daß eine Umschaltung zwischen den beiden Betriebsarten nur langsam durchgeführt werden kann.

Der vorliegenden Erfindung liegt die Aufgabe zugrunde, eine Speicheranordnung zu schaffen, die ein schnelles Umschalten zwischen den beiden Betriebsarten gestattet.

Diese Aufgabe wird erfindungsgemäß mit den im kennzeichnenden Teil des Anspruchs 1 angegebenen Merkmalen gelöst. Der Vorteil der Erfindung liegt darin, daß der Objektspeicher in beiden Betriebsarten die gleiche Struktur aufweist und der Anwender schnell von einer Betriebsart zur anderen umschalten kann.

Zweckmäßig werden vor Abschluß der ersten Betriebsart zu den im Objektspeicher abgespeicherten Objektnamen die dazugehörigen physikalischen Adressen errechnet und zu den entsprechenden Objektnamen im Objektspeicher hinterlegt.

Anhand der Zeichnung, in der ein Ausführungsbeispiel veranschaulicht ist, wird die Erfindung und deren Ausgestaltungen näher beschrieben.
- Figur 1: veranschaulicht die Funktion einer Speicheranordnung in einer ersten Betriebsart,
- Figur 2: in einer zweiten Betriebsart.

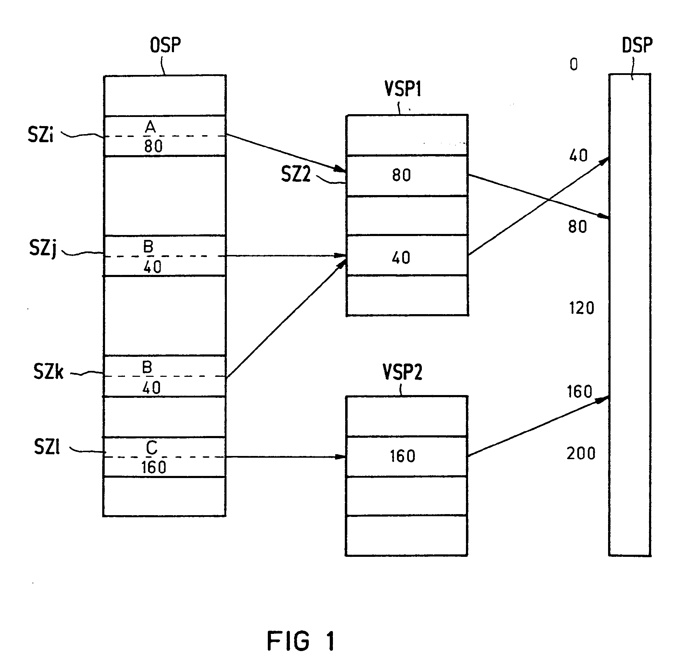

In Figur 1 ist mit OSP ein Objektspeicher bezeichnet, dessen Speicherzellen Objektnamen A, B und C enthalten, mit denen die Speicherzellen von Verweisspeichern VSP1 und VSP2 adressiert werden. Anstatt zwei Verweisspeichern können auch ein oder mehrere Verweisspeicher eingesetzt werden. In den Speicherzellen eines Datenspeichers DSP sind die zur weiteren Verarbeitung abgespeicherten Daten enthalten. Objektspeicher, Verweisspeicher und Datenspeicher können verschiedene Bereiche eines einzigen Speichers sein.

Im folgenden wird die erste Betriebsart an einem Beispiel näher erläutert. Aus einer Speicherzelle SZi des Objektspeichers OSP wird der Inhalt A ausgelesen und damit ein Zeiger auf eine Speicherzelle SZ2 des Verweisspeichers gesetzt. In dieser ist die physikalische Adresse "80" einer Speicherzelle des Datenspeichers DSP enthalten, mit der diese adressiert wird. Ihr Inhalt kann dann geändert oder gelöscht werden. Das Ansprechen der Zelleninhalte des Datenspeichers DSP, die in den Speicherzellen "40" und "160" enthalten sind, geschieht entsprechend mit Objektnamen B, C, die in Speicherzellen SZj, SZk und SZe stehen. Sollen neue Daten erstellt werden, wird ein neuer Objektname in den Objektspeicher OSP eingetragen, und es werden freie Zellen des Datenspeichers DSP ermittelt. Die erste Betriebsart wird damit abgeschlossen, daß zu den im Objektspeicher abgespeicherten Objektnamen die dazugehörigen neuen physikalischen Adressen zur Adressierung der Datenspeicherzellen ermittelt und zu diesen abgelegt werden. Desweiteren werden die physikalischen Adressen in die entsprechenden Speicherzellen des Verweisspeichers, die durch die Objekte des Objektspeichers adressiert werden, hinterlegt.

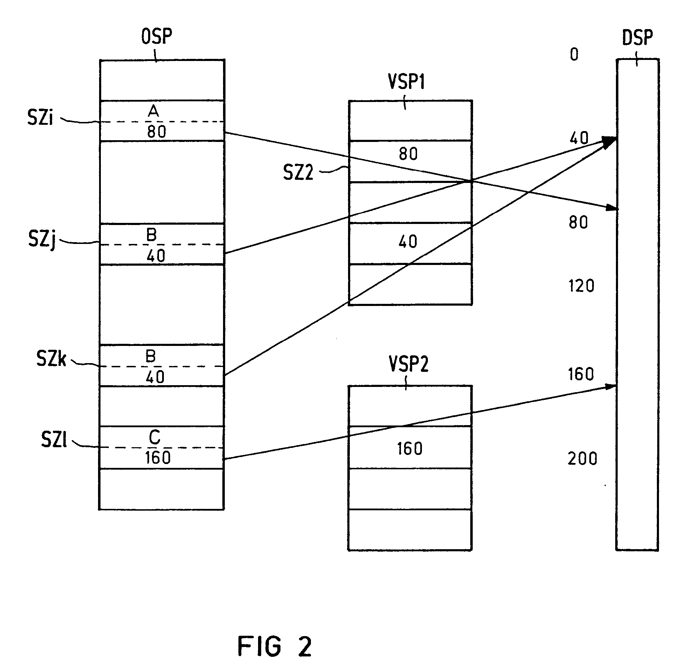

Nach Speicherung der physikalischen Adressen zur Adressierung des Datenspeichers kann sofort auf die zweite Betriebsart (Figur 2) umgeschaltet werden. In dieser wird auf die Daten in den Datenspeicherzellen durch Auslesen der in den Objektspeicherzellen hinterlegten physikalischen Adressen der Datenspeicherzellen zugegriffen. Z. B. wird durch Auslesen der physikalischen Adresse "80" aus der Speicherzelle SZi des Objektspeichers OSP der Inhalt der Speicherzelle des Datenspeichers mit der Adresse "80" gelesen.

## Patentansprüche

1. Speicheranordnung mit einem Datenspeicher (DSP), dessen Speicherzellen mit physikalischen Adressen adressierbar sind, **dadurch gekennzeichnet,** daß in einer zweiten Betriebsart die physikalischen Adressen aus den Speicherzellen (SZi ... SZl) eines Objektspeichers (OSP) und in einer ersten Betriebsart aus den Speicherzellen eines Verweisspeichers (VSP1, VSP2) ausgelesen werden, welche mit in den Speicherzellen (SZi ... SZl) des Objektspeichers (OSP) hinterlegten Objektnamen adressiert werden.

2. Speicheranordnung nach Anspruch 1, **dadurch gekennzeichnet,** daß zum Abschluß der ersten Betriebsart die physikalischen Adressen zur Adressierung der Speicherzellen (SZi ... SZl) des Datenspeichers (DSP) zu den entsprechenden Objektnamen hinterlegt werden.

## Claims

1. Memory system with a data memory (DSP), the memory cells of which are addressable by means of physical addresses, characterised in that in a second operating mode the physical addresses are read out from the memory cells (SZi ... SZl) of an object memory (OSP) and in a first operating mode are read out from the memory cells of a look-up memory (VSP1, VSP2) which are addressed by means of object names stored in the memory cells (SZi ... SZl) of the object memory (OSP).

2. Memory system according to Claim 1, characterised in that when the first operating mode is terminated the physical addresses for addressing the memory cells (SZi ... SZl) of the data memory (DSP) are saved together with the corresponding object names.

## Revendications

1. Dispositif de mémoire comportant une mémoire (DSP) de données, dont les cellules peuvent être adressées au moyen d'adresses physiques, caractérisé par le fait que dans un second type de fonctionnement, les adresses physiques sont lues à partir des cellules (SZi...SZ1) d'une mémoire (OSP) d'objets et, dans un premier type de fonctionnement, les adresses physiques sont lues à partir des cellules d'une mémoire (VSP1, VSP2) de référence, qui sont adressées avec des noms objets mémorisés dans les cellules (SZi...SZ1) de la mémoire (OSP) d'objets.

2. Dispositif de mémoire suivant la revendication 1, caractérisé par le fait que pour terminer le premier type de fonctionnement, les adresses physiques destinées à l'adressage des cellules (SZi...SZ1) de la mémoire (DSK) de données, sont mémorisées aux noms objets correspondants.
